# EUROPEAN PATENT SPECIFICATION

(11) **EP 3 145 125 B1**
(45) Date of publication and mention of the grant of the patent: **04.11.2020**
(21) Application number: 16166268.9
(22) Date of filing: 20.04.2016
(51) Int. Cl.: H04L 12/28

(54) **METHOD AND APPARATUS FOR CONTROLLING DEVICES**
VERFAHREN UND VORRICHTUNG ZUR STEUERUNG VON VORRICHTUNGEN
PROCÉDÉ ET APPAREIL POUR CONTRÔLER DES DISPOSITIFS

(30) Priority: 18.09.2015 CN 201510601095
(43) Date of publication of application: 22.03.2017
(73) Proprietor: Xiaomi Inc., Beijing 100085 (CN)
(72) Inventor: GAO, Sitai, Beijing 100085 (CN); JIA, Weiguang, Beijing 100085 (CN); HOU, Enxing, Beijing 100085 (CN)
(74) Representative: Cabinet Beau de Loménie

(56) References cited:
- US-A1- 2009 239 587
- US-A1- 2014 095 684
- US-A1- 2015 082 225

## Description

### FIELD

The present disclosure generally relates to the field of smart home, and more particularly to method and apparatus for controlling devices.

### BACKGROUND

Modern living are generally configured with a variety of devices, such as smart phone, television, stereo, air-condition, purifier, router, and the like which make the home users much more convenient.

In order to use these devices, each of the devices is generally configured with related controls or remote control for the users, the users can start and regulate every device with controlling or remote controlling when they using these devices.

During implementing the present invention, the inventor has found the problems of the prior art: when user actually use these devices, the process for controlling will be cumbersome due to there are too many home devices and every device runs independently and the starting and regulating of every device both need manual independent controlling.

Document US 2015/082225 A1 discloses a method for providing a graphical user interface suitable for viewing and modifying home automation, home security, and/or energy management devices.

Document US 2014/095684 A1 discloses a system that centrally manages a terminal device group composed of a plurality of terminal devices in a home.

### SUMMARY

The invention is defined in the appended set of claims.

In order to solve that cumbersome controlling process caused by every device run independently and need manual independent controlling, a method and apparatus for controlling devices are provided in the disclosure. The technical solution as follow.

According to a first aspect of the present disclosure, a method for controlling devices is provided, including: when an event occurs in a smart phone, detecting whether the event is a starting condition in a linkage scenario, wherein the linkage scenario comprises starting conditions and tasks corresponding to the starting conditions, the starting conditions and the tasks being set in accordance with events in the smart phone and the tasks being executed by executing devices; if the event is one of the starting conditions in the linkage scenario, determining an executing device corresponding to the starting condition in the linkage scenario; controlling the executing device to execute a task in the linkage scenario.

In a particular embodiment, controlling the executing device to execute a task in the linkage scenario, includes: generating an executing instruction in accordance with the task in the linkage scenario; sending the executing instruction to the executing device, wherein the executing instruction is used to trigger the execution of the task in the linkage scenario by the executing device.

The method for controlling devices provided in this embodiment of the first aspect of the present invention can achieve beneficial effects, including: after the determination of the task in the linkage scenario, informing the executing device for the task in order to enable the executing device to execute the task in the linkage scenario. Since the executing instruction may be generated automatically in accordance with the task in the linkage scenario and sent to the executing device directly, it will ensure that an automatic control of the executing device to execute the task in the linkage scenario and offer the possibility to implement the control of the executing device in automation.

In another embodiment, the method further includes: in a process of setting the linkage scenario, after one of the events related to the smart phone is selected, setting the selected event as a starting condition in the linkage scenario; after one of the tasks related to the executing device is selected, setting the selected task as a task of the linkage scenario.

The method for controlling devices provided in this embodiment of the first aspect of the present invention can achieve beneficial effects, including: setting the starting condition for the linkage scenario with the events related to the smart phone and setting the task for the linkage scenario with the tasks related to the executing device, in order to implement an interaction between the smart phone and the executing device. The users may select according to the events and tasks which are provided and set the linkage scenario as desired; the invention thus enables the setting of linkage scenario to be more conform with the requirements of the users.

According to a second aspect of the present invention, an apparatus for controlling devices according to claim 4 is provided.

The apparatus for controlling devices provided in the second aspect of the present invention can achieve beneficial effects, including: controlling the executing device to execute the corresponding task when the event occurs in the smart phone by associating that event with the actions of the executing device; since the smart phone may be associated with every executing device, after association the executing device associated with the smart phone may execute the corresponding task as long as the event occurs in the smart phone, so that it will control every executing device effectively without manual controlling. Thus it will solve the problem that cumbersome controlling process caused by every device running independently and needing manual independent controlling; achieve that the smart phone may interact with other devices, to realize the controlling automation without manual controlling.

In a particular embodiment, the controlling module including: a generating sub-module configured to generate an executing instruction in accordance with the task in the linkage scenario; a sending sub-module configured to send the executing instruction generated by the generating sub-module to the executing device, wherein the executing instruction issued to trigger the execution of the task in the linkage scenario by the executing device.

The apparatus for controlling devices provided in this particular embodiment of the second aspect of the present invention can achieve beneficial effects, including: after the determination of the task of the linkage scenario, informing the executing device for the task in order to enable the executing device to execute the task set in the linkage scenario; since the executing instructions may be generated according to the task in the linkage scenario automatically and sent to the executing device directly, it will ensure a control of the executing device automatically to execute the task set in the linkage scenario and the possibilities to implement the controlling of the executing device in automation.

In another embodiment, the apparatus further includes: a first setting module configured to, after one of the events related to the smart phone is selected, set the selected event as a starting condition in the linkage scenario; a second setting module configured to, after one of the tasks related to the executing devices is selected, set the selected task as a task in the linkage scenario.

The apparatus for controlling devices provided in this embodiment of the second aspect of the present invention can achieve beneficial effects, including: setting the starting condition for the linkage scenario with the event related to the smart phone, setting the task for the linkage scenario with the task related to the executing device, in order to implement the interaction between the smart phone and the executing device. The users may select according to the events and tasks which are provided and set the linkage scenario as desired, so that it will enable the setting of linkage scenario more conform with the requirements of the users.

In one particular embodiment, the steps of the above mentioned method For controlling devices are determined by computer program instructions.

Consequently, according to a third aspect, the invention is also directed to a computer program for executing the steps of a method for controlling devices as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary only, and are not restrictive of the present invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a smart home scenario diagrams showing a method for controlling devices according to part of exemplary embodiment;
Fig. 2 is a flow diagram illustrating a method for controlling devices according to an exemplary embodiment;
Fig. 3A is a flow diagram illustrating a method for controlling devices according to another exemplary embodiment;
Fig. 3B is a flow diagram illustrating a linkage scenario is set according to an exemplary embodiment;
Fig. 3C is a schematic diagram illustrating a setting interface for setting a linkage scenario according to an exemplary embodiment;
Fig. 3D is a schematic diagram illustrating a setting interface for setting a starting condition in a linkage scenario according to an exemplary embodiment;
Fig. 3E is a schematic diagram illustrating a setting interface for setting an executing task in a linkage scenario according to an exemplary embodiment;
Fig. 4 is a flow diagram illustrating a method for controlling devices according to another exemplary embodiment;
Fig. 5A is a flow diagram illustrating a method for controlling devices according to another exemplary embodiment;
Fig. 5B is a flow diagram illustrating an linkage scenario is set according to another exemplary embodiment;
Fig. 5C is a schematic diagram illustrating a setting interface for setting a starting condition in a linkage scenario according to another exemplary embodiment;
Fig. 5D is a schematic diagram illustrating a setting interface for setting an executive task in a linkage scenario according to another exemplary embodiment;
Fig. 6A is a structure block diagram illustrating an apparatus for controlling devices according to an exemplary embodiment;
Fig. 6B is a structure block diagram illustrating an apparatus for controlling devices according to another exemplary embodiment;
Fig. 7A is a structure block diagram illustrating an apparatus for controlling devices according to another exemplary embodiment;
Fig. 7B is a structure block diagram illustrating an apparatus for controlling devices according to another exemplary embodiment;
Fig. 8 is a block diagram illustrating an apparatus for controlling devices according to an exemplary embodiment;
Fig. 9 is a block diagram illustrating an apparatus for controlling devices according to another exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of apparatuses and methods consistent with aspects related to the invention as recited in the appended claims.

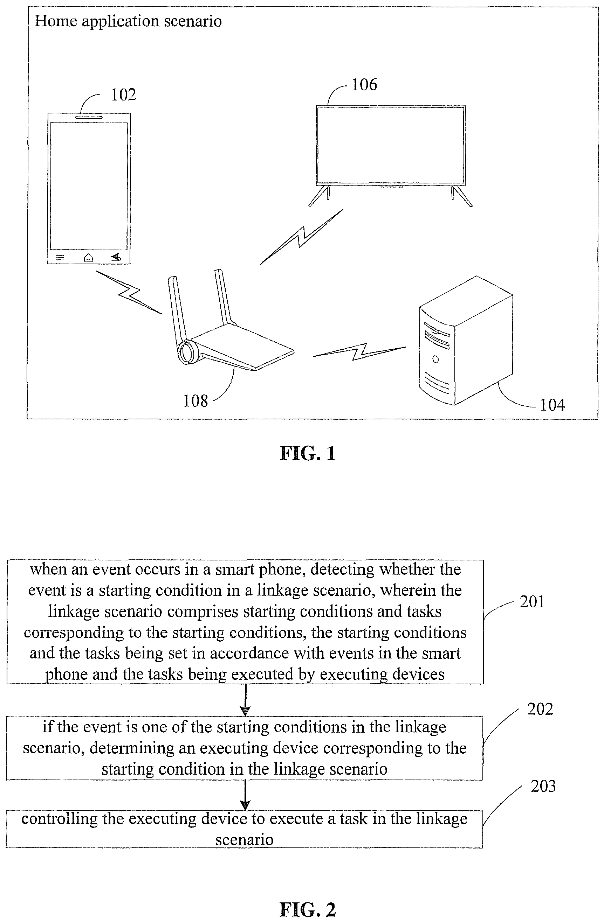

Fig. 1 is a home application scenario diagram showing a method for controlling devices according to part of exemplary embodiment. As shown in Fig.1, the home application scenario may include a smart phone 102, a server 104, and a smart device 106.

The smart phone 102 is connected to the server 104 over a wireless network, wherein the wireless network may a WLAN(Wireless Local Area Network), a WiFi (Wireless Fidelity) based on IEEE 802.11b standard, or a mobile network.

In a particular embodiment, when the smart phone 102 is connected to the server 104 over WiFi, the smart phone 102 may also be interconnected to the other smart devices 106.

In another embodiment, the smart phone 102 may also be interconnected to the other smart devices 106 via a Bluetooth or NFC (Near Field Communication) connection.

In a particular embodiment, a smart home client may be installed in the smart phone 102, the user may login to the server 104 with a user account registered successfully in the smart home client. In another embodiment, the user may also install the smart home client into the other smart devices, and the user may login with the user account on the smart device which has been installed with the smart home client.

The server 104 may be one server or may be a group of servers. The server 104 may store the user account hold by the smart phone 102, and store various smart devices that bound with the user account. In a particular embodiment, the server 104 is the server that provides the corresponding service for the home application scenario on network side.

In a particular embodiment, the home application scenario may also include a wireless router 108, wherein the wireless router 108 provides the WiFi environments for various smart devices in home.

Fig. 2 is a flow diagram illustrating a method for controlling devices according to an exemplary embodiment. As shown in Fig.2, the method for controlling devices is applied by the smart home client or the server 104, wherein the smart home client described herein may be installed into the smart phone 102 in practice environment shown in Fig.1, or may be installed into the other smart device. The method for controlling devices includes:

In step 201, when an event occurs in a smart phone, detecting whether the event is a starting condition in a linkage scenario, wherein the linkage scenario comprises starting conditions and tasks corresponding to the starting conditions, the starting conditions and the tasks being set in accordance with events in the smart phone and the tasks being executed (or likely to be executed) by executing devices.

In step 202, if the event is one of the starting conditions in the linkage scenario, determining an executing device corresponding to the starting condition in the linkage scenario.

In step 203, controlling the executing device to execute a task in the linkage scenario.

In conclusion, a method for controlling devices provided in the present invention, with controlling the executing device to execute the corresponding task when the event occurs in the smart phone by associating that event with the actions of the executing device. Since the smart phone may be associated with every executing device, after association, the executing device associated with the smart phone may execute the corresponding task as long as the event occurs in the smart phone, so that it will control every executing device effectively without manual controlling. Thus it will solve the problem that cumbersome controlling process caused by every device running independently and needing manual independent controlling; achieve that the smart phone may be interacted with other devices, to realize the controlling automation without manual controlling.

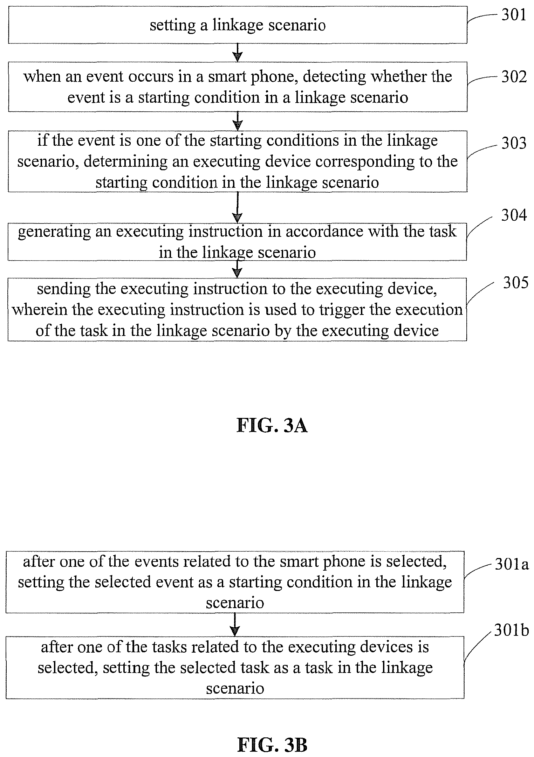

Fig. 3A is a flow diagram illustrating a method for controlling devices according to another exemplary embodiment. As shown in Fig.3A, the method for controlling devices is applied by the smart home client or the server 104, wherein the smart home client described herein may be installed into the smart phone 102 in practice environment shown in Fig.1, or may be installed into the other smart device. The method for controlling devices includes:

In step 301, setting the linkage scenario.

The linkage scenario described herein includes the starting condition set with the events in the starting device and the tasks executed by the smart phone that correspond to the starting condition. That is, every linkage scenario is comprised of two parts, one is the starting condition and another is the task(s) executed when the starting condition is complied.

In the present embodiment, the device corresponding to the starting condition is the smart phone, and the device executing the tasks is the executing device.

The executing devices described herein are generally the other various devices in the smart home, for example, the executing devices may be another smart phone, a smart television, a smart stereo, a tablet, an air purifier, a smart air-condition, a desktop, a smart gate, a smart window, a smart switch or a socket and the like.

Obviously, in the actual smart home, the executing devices are not limited to the various devices cited above, and the present embodiment will not limit these specific types of executing devices.

Referring to the steps in Fig.3B,the process of setting the linkage scenario includes:

In step 301a, after one of the events related to the smart phone is selected, setting the selected event as a starting condition in the linkage scenario.

In a possible implementation, the user may log onto the smart home client with the user account, and use the linkage scenario set by the smart home client. Generally, the user may use the smart home client which is on the electronic device used by the user to log onto the user account. The electronic device herein may be the smart phone, tablet, etc. When the user logs onto the smart home client with the user account successfully, the client can obtain the related information of the user account logged onto from the server, which include the information about the smart phone and the other various devices bound to the user account, and the events of the smart phone and the executive tasks of the other various devices which are provided. Herein the smart device is referred to as the executing device when used to set the linkage scenario.

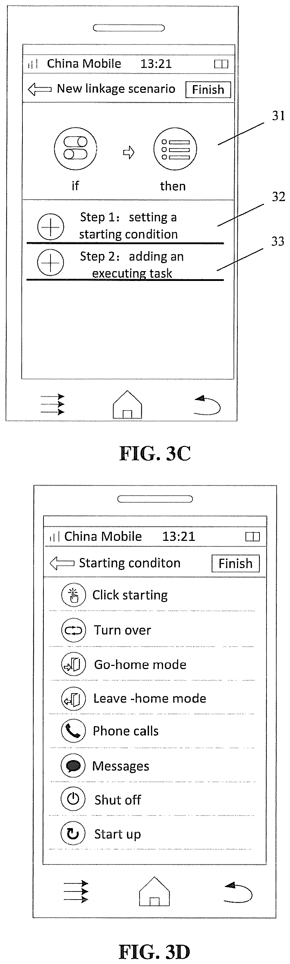

In the processing of setting the linkage scenario, the smart home client shows the entry for setting the starting condition and tasks of the linkage scenario within the setting interface of the linkage scenario. Fig.3C is a schematic diagram illustrating a setting interface for setting a linkage scenario according to an exemplary embodiment. In Fig.3C, the setting interface 31 provides the setting entry 32 for setting the starting condition of the linkage scenario and the setting entry 33 for setting the tasks of the linkage scenario.

When the user triggers the entry for setting the starting condition of the linkage scenario in the setting interface, the smart home client may display the various events of the smart phone bound to the user account. The events of the smart phone may include receiving an incoming call, hanging up an incoming call, receiving a short message, replying a short message, shutting off, restarting, turning up a volume, turning down a volume, starting a silent mode, closing a silent mode, starting an airplane mode, closing an airplane mode or events determined by parameters sensed by sensors in the smart phone, wherein the parameters are a light intensity, a volume, an acceleration and/or an angular acceleration. The events of the smart phone may also be an event that is triggered by image sensor, fingerprint identification sensor, electro-optical sensor, acceleration sensor, gravity sensor, distance sensor, direction sensor and the like, for example, identify someone by taking photos, identify someone with fingerprint identification, click the smart phone, swing the smart phone up and down, swing the smart phone left and right, turn-over the smart phone, incline the smart phone in certain angle (for example, 90 degree) and the like.

Fig. 3D is a schematic diagram illustrating a setting interface for setting a starting condition in a linkage scenario according to an exemplary embodiment. In Fig.3D, the events of the smart phone displayed within the setting interface of the starting condition include: setting the phone turned over, at home mode, leave home mode, calls, messages, shut off, start up, etc. The user can select one of these events as the starting condition of the linkage scenario. That is the starting condition is the selected event when it occurs.

Generally, after one of the events related to the smart phone is selected, the smart phone may generate one condition selecting instruction. The condition selecting instruction is used to indicate that the selected event is determined to be the starting condition of the linkage scenario. The event which the selecting instruction has indicated is set as the starting condition of the linkage scenario.

In step 301b, after one of the tasks related to the executing device is selected, setting the selected task as a task in the linkage scenario.

When the user triggers the entry for setting the task in the setting interface, the smart home client may display the various tasks of the various executing device bound to the user account. The different executing devices are corresponding to the same task or to different tasks. The task(s) of the executing device is (are) related to the performance, type and the like of the smart devices.

For a smart light, for example, the tasks executable by the smart light include turning up the light, turning off the light, light flashing.

For an air purifier, in another example, the tasks executable by the air purifier include starting up cleaning function, staring up sleeping function, indicator lamp flashing.

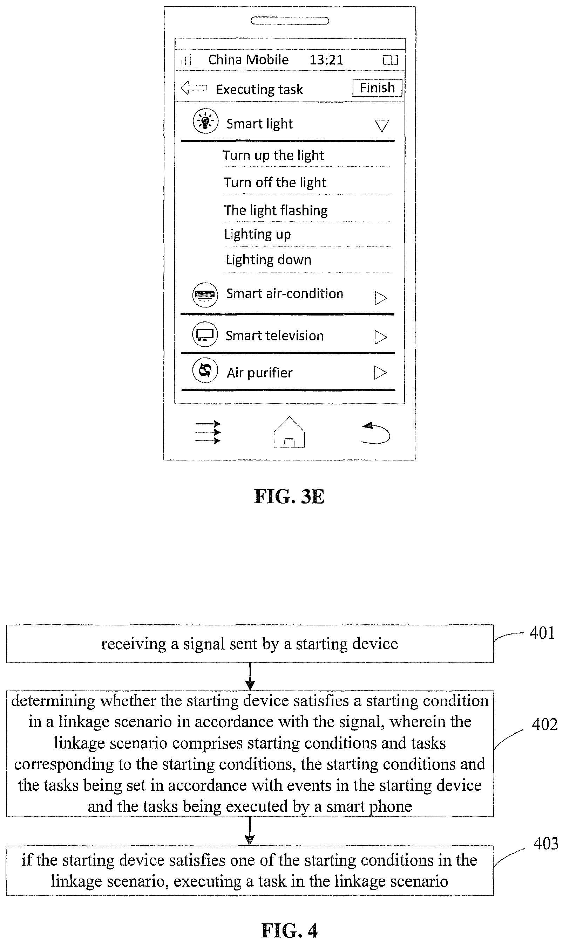

Fig. 3E is a schematic diagram illustrating a setting interface for setting an executive task in a linkage scenario according to an exemplary embodiment. In Fig.3E, the various smart devices and the executive tasks of the various smart devices are displayed in the setting interface of the executive task, for example, the executive tasks which the smart light corresponding to, include: turning up the light, turning off the light, light flashing, lighting up, lighting down. There are other smart devices in the setting interface, such as smart air-condition, smart television and air purifier. The user may trigger the entries of these smart devices, so that the triggered executive tasks which the smart light corresponding to are displayed on the smart phone.

It should be noted that the smart device which is set for executing the task in linkage scenario is referred to as the executing device.

Generally, after one of the tasks related to the executing device is selected, the smart phone may generate one task selecting instruction, the task selecting instruction is used to indicate that the task which the selected smart device can execute is determined to be the task of the linkage scenario, the task which the task selecting instruction has indicated is set as the task which executed by the executing device in the linkage scenario.

It is worthy to be noted that both various events of the smart phone and the various executive tasks of the smart device which are displayed on the smart home client are predetermined. Certainly, the various events of the smart phone and the various executing tasks of the smart device which are displayed on the smart home client may be the recommendation of the client to the server.

According to step 301a and step 301b, the user may implement the setting of the linkage scenario as desired.

For example, when the user brings the smart phone back to home, he/she can pre-start the smart air condition. At this time, the starting condition of the linkage scenario set by the user may be that the smart phone is in a home mode, and the task of the linkage scenario is starting up the smart air condition.

In another example, when the smart phone is shut off, it generally means that the user is going to sleep. At this time, the starting condition of the linkage scenario set by user may be that the smart phone is shut off, and the task of the linkage scenario is turning off the smart light.

In actual applications, the user may combine the common events of the smart phone as necessary to associate other smart devices, so that it can implement the interaction in different scenario.

It should be noted that the executing order of the step 301a and 301b can be exchanged, the user may set the linkage scenario according to the actual demand, for example, it may either set one linkage scenario or set two or more linkage scenarios.

In one possible scenario, a unique identifier may be generated for each linkage scenario when setting the linkage scenarios in order to distinguish them. The starting conditions and tasks executed by the executing device of the linkage scenarios may refer to the table 1 below:

**Table 1 The setting of the starting conditions and the executing tasks**

| Identifier of the linkage scenario | Starting conditions | The executing tasks |
|---|---|---|
| 1 | Smart phone calls | Smart light flashing lightly |
| 2 | Smart phone messages | WiFi speaker ringing dingdong |
| 3 | Smart phone shuts off | Turn off all of smart devices in living room |
| ... | ... | ... |

Additionally, the starting conditions of the linkage scenarios may the operation for the smart phone. The corresponding starting conditions and tasks executed by the executing device of the linkage scenarios may refer to the table 2 below:

**Table 2 The setting of the starting conditions and the executing tasks**

| Identifier of the linkage scenario | Starting conditions | The executing tasks |
|---|---|---|
| 1 | Click the smart phone | Start up or shut off any of the smart devices |
| 2 | Turn-over the smart phone or swing the smart phone up and down, left and right, | Smart light flashing, smart air condition switching modes, smart television switching channels |
| 3 | Incline the smart phone in certain angle | Turn up or turn down the volume of the smart television |
| 4 | Identify someone by taking photos or identify someone with fingerprint identification, verify the user identification | Start up or shut off smart security system |
| ... | ... | ... |

In step 302, when an event occurs in the smart phone, detecting whether the event is a starting condition of a linkage scenario.

When detecting the event that occurs in the smart phone, the different events

correspond to the different detecting methods.

In the example wherein the event in the linkage scenario is that the smart phone is in ago-home mode, if the smart phone is found that it has been connected with the wireless router at home, it means that the smart phone is in the go-home mode; or in accordance with the location data of the geographic position of the smart phone, if the geographic position of the smart phone has been determined to be close to home, it means that the smart phone is in the go-home mode.

In another example wherein the event in the linkage scenario is that the smart phone is in a leave-home mode, if the smart phone is found to be disconnected with the wireless router at home, it means that the smart phone is in the leave-home mode; or in accordance with the location data of the geographic position of the smart phone, if the geographic position of the smart phone has been determined to be far away from home, it means that the smart phone is in the leave-home mode.

In another example wherein the smart phone calls, if the system of the smart phone has monitored the calls, it can inform the smart home client with the results, and the smart home client can determine that there are calls for the smart phone.

When the event that occurs in the smart phone has been determined, it can detect whether the event is the starting condition of the linkage scenario which has been set. In an embodiment, the linkage scenario which has been set by the user may be synchronized to the server, after the server has received the linkage scenario which has been set by the user, the linkage scenario and the user account may be stored correspondingly; when the user account logged on the smart home client, the various linkage scenarios corresponding to the user account can be obtained from the server and may be displayed on the smart home client.

In step 303, determining an executing device corresponding to the starting condition in the linkage scenario if the event is one of the starting conditions in the linkage scenario.

In an embodiment, if the smart home client is stored with various linkage scenarios, the starting condition can be queried to be the event of the linkage scenario, it can obtain the executing device corresponding to the starting condition in the linkage scenario.

In step 304, generating an executing instruction in accordance with the task in the linkage scenario.

The smart home client in the smart phone may generate the executing instruction in accordance with the task in the linkage scenario, in order to ensure that the executing device can execute the corresponding task, for example, when the task that has been set is turn off the light, the executing instruction may be a closing instruction.

After the smart home client in the smart phone has determined the event of the smart phone that occurs and the linkage scenario of which the start condition is that event, it can query the executing device in the linkage scenario and the task to be executed by the executing device. According to the task to be executed by the executing device, generating an executing instruction for the executing device which can identify the task correctly.

In the step 305, the executing instruction is sent to the executing device, wherein the executing instruction is used to trigger the execution of the task in the linkage scenario by the executing device.

The smart home client can either send the executing instruction to the executing device directly, or send the executing instruction to the device on network side, and then this device forwards it to the executing device.

In conclusion, the method for controlling devices provided in the present invention, enables controlling the executing device to execute the corresponding task when the event occurs in the smart phone by associating that event with the actions of the executing device. Since the smart phone may be associated with every executing device, after association the executing device associated with the smart phone may execute the corresponding tasks as long as the event occurs in the smart phone, so that it will control every executing device effectively without manual controlling. Thus it will solve the problem that cumbersome controlling process caused by every device running independently and needing manual independent controlling; achieve that the smart phone may be interacted with other devices, to realize the controlling automation without manual controlling.

Moreover, the method for controlling devices provided in the present invention, after the determination of the task of the linkage scenario, informs the executing device which has to execute the task, in order to enable the executing device to execute the task set in the linkage scenario. Since the executive instructions may be generated in accordance with the task in the linkage scenario automatically and sent to the executing device directly, it will ensure that control the executing device automatically to execute the task set in the linkage scenario and the possibilities to implement the controlling of the executing device in automation.

Moreover, the method for controlling devices provided in the present invention, sets the starting condition for the linkage scenario in connection with the events related to the smart phone, sets the task for the linkage scenario in connection with the tasks related to the executing device, in order to implement the interaction between the smart phone and the executing device. The users may select in accordance with the events and tasks which are provided and set the linkage scenario as desired, it will enable the setting of linkage scenario more conform with the requirements of the users.

Moreover, the method for controlling devices provided in the present invention, sets the types of the events in the smart phone, wherein these events in the smart phone generally have a stronger association with the other subsequent controls operated by users in actual life, so that the implementations of the linkage scenario are more abundant and more fit with the usage habits of the users, in order to enable the home life become more intelligent.

It should be noted that the steps 302-305 may also be used in the devices on the network side. That is, when the event occurs in the smart phone, it is possible to send the events of the smart phone or the information describing the events in the smart phone which have happened to the device on the network side with the user account. If the event is one of the starting condition in the linkage scenario, the device on the network side may then determine the executing device which corresponds to the starting condition in the linkage scenario. The instructions may be generated by the devices on the network side in accordance with the tasks which have been set in the linkage scenario; and the executing instructions may be sent to the executing device by the devices on the network side

Fig. 4 is a flow diagram illustrating a method for controlling devices in accordance with another exemplary embodiment. As shown in Fig.4, the method for controlling devices is applied by the smart home client or the server 104, wherein the smart home client described herein may be installed into the smart phone 102 in practice environment shown in Fig.1, or may be installed into the other smart device. The method for controlling devices includes:
In step 401, receiving a signal sent by a starting device.
In step 402, determining whether the starting device satisfies a starting condition in a linkage scenario in accordance with the signal, wherein the linkage scenario comprises starting conditions and tasks corresponding to the starting conditions, the starting conditions and the tasks being set in accordance with events in the starting device and the tasks being executed or likely to be executed) by a smart phone.
In step 403, if the starting device satisfies one of the starting conditions in the linkage scenario, executing a task in the linkage scenario.

In conclusion, the method for controlling devices provided in the present invention enables controlling the smart phone to execute the corresponding task when the event occurs in the starting device by associating that event with the actions of the smart phone. Since every executing device may be associated with the smart phone, after association the smart phone may execute the corresponding tasks associated to the events as long as the event occurs in the starting device, so that it will control the smart phone effectively without manual controlling. Thus it will solve the problem that cumbersome controlling process caused by every device running independently and needing manual independent controlling; achieve that the smart phone may be interacted with other devices, to realize the controlling automation without manual controlling.

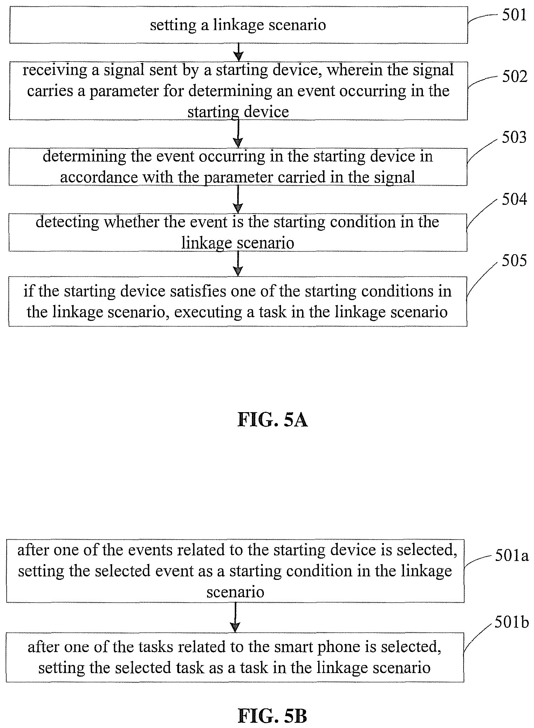

Fig. 5A is a flow diagram illustrating a method for controlling devices in accordance with another exemplary embodiment. As shown in Fig.5A, the method for controlling devices is applied by the smart home client or the server 104, wherein the smart home client described herein may be installed into the smart phone 102 in practice environment shown in Fig.1, or may be installed into the other smart device. The method for controlling devices includes:
In step 501, setting the linkage scenario.

The linkage scenario described herein includes the starting conditions set with the events in the starting device, and the tasks executed by the smart phone that corresponding to the starting conditions.

In the present embodiment, the device corresponding to the starting condition is the smart phone, and the device which executes the tasks is the executing device.

The executing devices described herein are generally various devices in a smart home, for example, the executing devices may be another smart phone, smart television, smart stereo, tablet, air purifier, smart air-condition, desktop, smart gate, smart window, smart switch or socket and the like.

Obviously, in the actual smart home, the executing devices are not limited to the various devices cited above, and the present embodiment will not be limited by these specific types of executing devices.

Referring to the steps in Fig.5B the process of setting the linkage scenario includes:
In step 501a, after one of the events related to the smart phone is selected, setting the selected event as a starting condition in the linkage scenario.

In a possible implementation, the user may log onto the smart home client with the user account, and use the linkage scenario set by the smart home client. Generally, the user may use the smart home client which is on the electronic device used to log onto the user account. The electronic device herein may be the smart phone, tablet, etc. When the user login the smart home client with the user account successfully, the client can obtain the related information of the user account logged in from the server, which include the information about the smart phone and the other various devices bound to the user account, and the events of the smart phone and the executive tasks of the other various devices which are provided. Herein the smart device is referred to as the executing device when used to set the linkage scenario.

It should be noted that the above application scenario is only exemplary, and the present invention is not limited thereto.

In the processing of setting the linkage scenario, the smart home client shows the entry for setting the starting condition and tasks of the linkage scenario within the setting interface of the linkage scenario (e.g. as depicted in Fig.3C).

When the user triggers the entry for setting the task in the setting interface, the smart home client may display the various events of the various smart device bonded with the user account. The different smart devices are corresponding to the same event or different events, The event of the smart device is related to the performance, type and the like of the smart device.

For a smart light, for example, the events that the smart light corresponds to, include : turning up the light, turning off the light, light flashing.

For an air purifier, in another example, the events that the air purifier corresponds to, include: starting up cleaning function, staring up sleeping function, indicator lamp flashing.

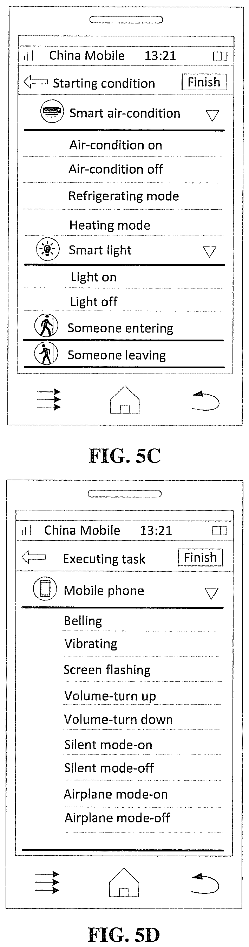

Fig. 5C is a schematic diagram illustrating a setting interface for setting a starting condition in a linkage scenario in accordance with another exemplary embodiment. In Fig.5C, the various smart devices and the events of the various smart devices are displayed in the setting interface of the starting condition. For example, the events which the smart light corresponds to, include: the light on, the light off. In another example, the events which the smart air-condition corresponds to, include: air-condition on, air-condition off, refrigerating mode, heating mode. The setting interface also includes other events, such as, someone entering, someone leaving.

The event "someone entering" and "someone leaving" may also be determined based on the status parameters collected by the smart device.

It should be noted that the smart device which is set for executing the starting condition in linkage scenario is referred to as the starting device.

Generally, after one of the events related to the executing device is selected, the smart phone may generate one condition selecting instruction. The condition selecting instruction is used to indicate that the event which the selected smart device can execute is determined to be the starting condition of the linkage scenario. The event of the smart device which the condition selecting instruction has indicated is set as the starting condition of the executing device in the linkage scenario.

In step 501b, after one of the tasks related to the smart phone is selected, setting the selected task as a task in the linkage scenario.

When the user triggers the entry for setting the task in the setting interface, the smart home client may display the tasks of the smart phone bonded with the user account.

Fig. 5D is a schematic diagram illustrating a setting interface for setting an executive task in a linkage scenario in accordance with another exemplary embodiment. In Fig.5D, the tasks of the smart phone displayed in the setting interface, include: belling, vibrating, screen flashing, volume-turn up, volume-turn down, silent mode-on, silent mode-off, airplane mode-on, airplane mode-off. The user may select anyone of these tasks as the task of the linkage scenario.

Generally, after one of the tasks related to the smart phone is selected, the smart phone may generate one task selecting instruction, the task selecting instruction is used to indicate that the task in the selected smart device is determined to be the task of the linkage scenario, the task which the task selecting instruction has indicated is set as the executing task of the linkage scenario.

In an embodiment, the tasks in the smart phone are shutting off, receiving an incoming call, displaying an unread message, restarting, turning up a volume, turning down a volume, starting a silent mode, closing a silent mode, starting an airplane mode, and closing anairplane mode, and the other tasks shown in Fig.5D. Obviously, the tasks mentioned above may also be the tasks which are implemented by the other smart phones, the present invention is not limited to the tasks in smart phone.

It is worthy to be noted that both the various events of the smart phone and the various task of the smart device which are displayed on the smart home client are predetermined. Certainly, the various tasks of the smart phone and the various events of the smart device which are displayed on the smart home client may be the recommendation of the client to the server.

According to step 501a and step 501b, the user may implement the setting of the linkage scenario as desired.

For example, when the smart television is playing a video, it can turn up the volume of the smart phone. At this time, the starting condition of the linkage scenario set by the user may be that the smart television is playing the video, and the task of the linkage scenario is turning up the volume of the smart phone.

In another example, when the smart light is turned off, the user wants to know where the phone is. At this time, the starting condition of the linkage scenario set by user may be that the smart light is turned off, and the task of the linkage scenario is enabling the smart phone screen flashing.

In step 502, receiving a signal sent by a starting device, wherein the signal carries the parameters for determining the starting device.

Generally, when some event occurs in the starting device, the starting device will obtain the parameters to determine the event that has happened correspondingly.

For example, when the air purifier is cleaning the air, it will obtain the air quality parameters that have been collected correspondingly.

In another example, when the air condition is in heating mode, the air condition will obtain the parameters which indicate the air condition is in heating mode correspondingly.

When the starting device determines the event that has happened, it will send the signal which corresponds to the event to the smart phone or smart home client, or send it to the devices on the network side and the devices on the network side forward it to the smart phone . The signal generally carries a parameter for determining an event in the starting device.

In step 503,determining the event occurring in the starting device in accordance with the parameter carried in the signal,

There are different events in different starting devices, such as starting up, shutting off, restarting, starting a refrigeration mode, starting a heating mode, detecting someone entering or detecting someone leaving.

In step 504, detecting whether the event is the starting condition in the linkage scenario.

In step 505, if the starting device satisfies one of the starting conditions in the linkage scenario, executing a task set in the linkage scenario.

In conclusion, the method for controlling devices provided in the present invention enables controlling the smart phone to execute the corresponding task when the event occurs in the starting device by associating that with the actions of the smart phone. Since every executing device may be associated with the smart phone, after association the smart phone may execute the corresponding tasks associated to the event as long as the event occurs in the starting device, so that it will control the smart phone effectively without manual controlling. Thus it will solve the problem that cumbersome controlling process caused by every device running independently and needing manual independent controlling; achieve that the smart phone may be interacted with other devices, to realize the controlling automation without manual controlling.

Moreover, the method for controlling devices provided in the present invention, determines which event has happened in the starting device in accordance with the parameter carried in the signal which was sent by the starting device, and then determines whether there is the linkage scenario with the starting condition which is based on the event. Since it can determine the event that occurs in the starting device after learning of the starting device, it can ensure that the smart phone executes the task corresponding to the signal correctly.

Moreover, the method for controlling devices provided in the present invention, sets the starting condition for the linkage scenario with the events related to the starting device which are provided, and sets the task for the linkage scenario with the tasks related to the smart phone which are provided, in order implement the linkage between the starting device and the smart phone. The users may select in accordance with the events and tasks which are provided and set the linkage scenario as desired, it will enable the setting of the linkage scenario more conform with the requirements of the users.

Moreover, the method for controlling devices provided in the present invention, sets the types of the events in the smart phone, wherein these tasks in the smart phone generally have a stronger association with the other controls operated by users in actual life, so that the implementations of the linkage scenario are more abundant and more fit with the usage habits of the users, in order to enable the home life become more intelligent.

In the following, different embodiments of the apparatus which can execute the embodiments of the method of the present invention are disclosed. For the details that are not disclosed in the embodiments of the apparatus, please refer to the embodiments of the method.

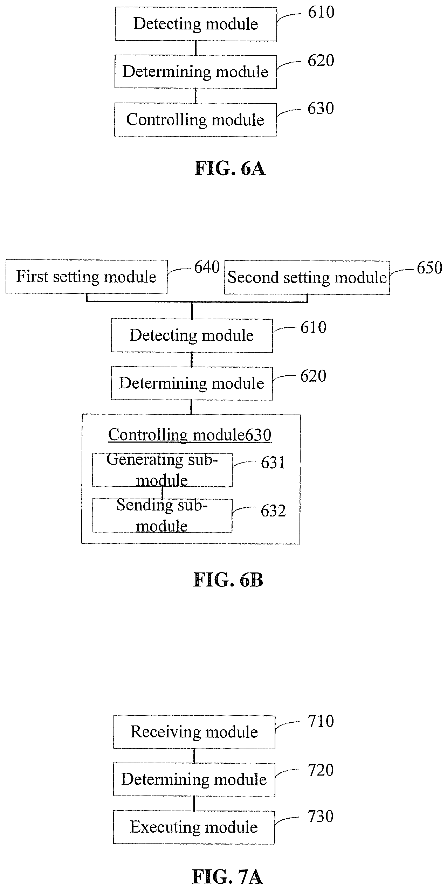

Fig. 6A is a structure block diagram illustrating an apparatus for controlling devicesin accordance with an exemplary embodiment. As shown in Fig.6A, the apparatus for controlling devices may be implemented in the smart home client or the server 104, wherein the smart home client described herein may be installed into the smart phone 102 in practice environments shown in Fig. 1, or may be installed into the other smart device. The apparatus for controlling devices includes but is not limited to:
a detecting module 610 configured to, when an event occurs in a smart phone, detect whether the event is a starting condition in a linkage scenario, wherein the linkage scenario comprises starting conditions and tasks corresponding to the starting conditions, the starting conditions and the tasks being set in accordance with events in the smart phone and the tasks being executed (or likely to be executed) by executing devices;
a determining module 620 configured to, if the event detected by the detecting module 610 is one of the starting conditions in the linkage scenario, determine an executing device corresponding to the starting condition in the linkage scenario;
a controlling module 630 configured to control the executing device determined by the determining module 620 to execute a task in the linkage scenario.

Fig. 6B is a structure block diagram illustrating an apparatus for controlling devices in accordance with another exemplary embodiment. The controlling module 620 includes: a generating sub-module 631 and a sending sub-module 632.

The generating sub-module 631 is configured to generating an executing instruction in accordance with the task in the linkage scenario.

The sending sub-module 632 is configured to send the executing instruction generated by the generating sub-module 631 to the executing device. The executing instructions are used to trigger the execution of the task in the linkage scenario by the executing device.

In a possible implementation referring to Fig.6B, the apparatus for controlling devices further includes: a first setting module 640 and a second setting module 650.

The first setting module is configured to, in a process of setting the linkage scenario, after one of the events related to the starting device is selected, set the selected event as a starting condition in the linkage scenario.

The second setting module is configured to, in the process of setting the linkage scenario, after one of the tasks related to the smart phone is selected, set the selected task as a task in the linkage scenario.

In a possible implementation, the events are receiving an incoming call, hanging up an incoming call, receiving a short message, replying a short message, shutting off, restarting, turning up a volume, turning down a volume, starting a silent mode, closing a silent mode, starting an airplane mode, closing an airplane mode or events determined by parameters sensed by sensors in the smart phone, wherein the parameters are a light intensity, a volume, an acceleration and/or an angular acceleration.

In conclusion, the apparatus for controlling devices provided in the present invention, enables controlling the executing device to execute the corresponding task when the event occurs in the smart phone by associating that with the actions of the executing device. Since the smart phone may be associated with every executing device, after association the executing device associated with the smart phone may execute the corresponding task as long as the event occurs in the smart phone, so that it will control every executing device effectively without manual controlling. Thus it will solve the problem that cumbersome controlling process caused by every device running independently and needing manual independent controlling; achieve that the smart phone may be interacted with other devices, to realize the controlling automation without manual controlling.

Moreover, the apparatus for controlling devices provided in the present invention, after the determination of the task of the linkage scenario, informs the executing device which has to execute the task in order to enable the executing device to execute the task set in the linkage scenario. Since the executive instructions may be generated in accordance with the task set in the linkage scenario automatically and sent to the executing device directly, it will ensure that control the executing device automatically to execute the task set in the linkage scenario and the possibilities to implement the controlling of the executing device in automation.

Moreover, the apparatus for controlling devices provided in the present invention, sets the starting condition for the linkage scenario with the events related to the smart phone which are provided, and sets the task for the linkage scenario with the tasks related to the executing device which are provided, in order implement the interaction between the smart phone and the executing device. The users may select in accordance with the events and tasks which are provided and set the linkage scenario as desired, it will enable the setting of linkage scenario more conform with the requirements of the users.

Moreover, the apparatus for controlling devices provided in the present invention, sets the types of the events in the smart phone, wherein these tasks in the smart phone generally have a stronger association with the other subsequent controls operated by users in actual life, so that the implementation of the linkage scenario is more abundant and more fit with the usage habits of the users to enable the home life become more intelligent.

Fig. 7A is a structure block diagram illustrating an apparatus for controlling devicesin accordance with another exemplary embodiment. As shown in Fig.7A, the apparatus for controlling devices may be implemented in the smart home client or the server 104, wherein the smart home client described herein may be installed into the smart phone 102 in practice environments shown in Fig.1, or may be installed into the other smart device. The apparatus for controlling devices includes but is not limited to: a receiving module 710, a determining module 720, and executing module 730.

The receiving module 710 is configured to receive a signal sent by a starting device.

The determining module 720 is configured to determine whether the starting device satisfies a starting condition in a linkage scenario in accordance with the signal received by the receiving module 710, wherein the linkage scenario includes starting conditions and tasks corresponding to the starting conditions, the starting conditions and the tasks being set in accordance with events in the starting device and the tasks being executed (or likely to be executed) by a smart phone.

The executing module 730 is configured to execute a task in the linkage scenario if the determining module 720 determines that the staring device satisfies one of the starting conditions in the linkage scenario.

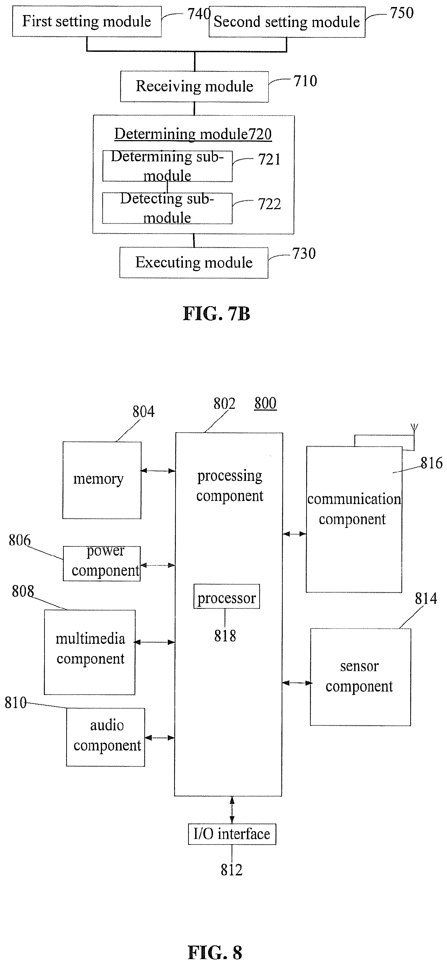

Fig. 7B is a structure block diagram illustrating an apparatus for controlling devices in accordance with another exemplary embodiment. In Fig.7B, the signal carries the parameters for determining the starting device and the determining module 720 includes: a determining sub-module 721 and a detecting sub-module 722.

The determining sub-module 721is configured to determine the event occurring in the starting device in accordance with the parameter carried in the signal received by the receiving module 710. The events are starting up, shutting off, restarting, starting a refrigeration mode, starting a heating mode, detecting someone entering or detecting someone leaving.

The detecting sub-module 722 is configured to detect whether the event determined by the determining sub-module 721 is the starting condition in the linkage scenario.

In a possible implementation, referring to Fig.7B, the apparatus for controlling devices further includes: a first setting module 740 and a second setting module 750.

The first setting module 740 is configured to, in a process of setting the linkage scenario, after one of the events related to the starting device is selected, set the selected event as a starting condition in the linkage scenario;

The second setting module 750 is configured to, in the process of setting the linkage scenario, after one of the tasks related to the smart phone is selected, set the selected task as a task in the linkage scenario.

In a possible implementation, the tasks are shutting off, receiving an incoming call, displaying an unread message, restarting, turning up a volume, turning down a volume, starting a silent mode, closing a silent mode, starting an airplane mode, and closing an airplane mode.

In conclusion, the apparatus for controlling devices provided in the present invention enables controlling the smart phone to execute the corresponding task when the event occurs in the starting device by associating that with the actions of the smart phone. Since every executing device may be associated with the smart phone, after association the smart phone may execute the corresponding tasks associated with the event as long as the event occurs in the starting device, so that it will control the smart phone effectively without manual controlling. Thus it will solve the problem that cumbersome controlling process caused by every device running independently and needing manual independent controlling; achieve that the smart phone may be interacted with other devices, to realize the controlling automation without manual controlling.

Moreover, the apparatus for controlling devices provided in the present invention, determines which event has happened in the starting device in accordance with the parameter carried in the signal which is sent by the starting device, and then determines whether there is the linkage scenario with the starting condition which is based on the event. Since it can determine that the event has occurred in the starting device after determining the starting device, it can ensure that the smart phone executes the task corresponding to the signal correctly.

Moreover, the apparatus for controlling devices provided in the present invention, sets the starting condition for the linkage scenario with the events related to the starting device which are provided, and sets the task for the linkage scenario with the tasks related to the smart phone which are provided, in order to implement the interaction between the starting device and the smart phone. The users may select in accordance with the events and tasks which are provided and set the linkage scenario as desired, it will enable the setting of the linkage scenario more conform with the requirements of the users.

Moreover, the apparatus for controlling devices provided in the present invention, sets the types of the events in the smart phone, wherein these tasks in the smart phone generally have a stronger association with the other controls operated by users in actual life, so that the implementations of the linkage scenario are more abundant and more fit with the usage habits of the users, to enable the home life become more intelligent.

With respect to the devices in the above embodiments, the specific manners that the respective modules perform operations have been described in detail in the embodiments regarding the relevant methods, and will not be elaborated herein.

An apparatus for controlling devices is provided in an exemplary embodiment of the present invention. It can implement the method for controlling the device. The method for controlling the device is applied in the smart home client or in devices on the network side. The apparatus for controlling the device includes: a processor, a memory for storing instructions executable by the processor wherein the processor is configured to: when an event occurs in a smart phone, detect whether the event is a starting condition in a linkage scenario, wherein the linkage scenario comprises starting conditions and tasks corresponding to the starting conditions, the starting conditions and the tasks being set in accordance with events in the smart phone and the tasks being executed (or likely to be executed) by executing devices; if the event is one of the starting conditions in the linkage scenario, determine an executing device corresponding to the starting condition in the linkage scenario; control the executing device to execute a task in the linkage scenario.

An apparatus for controlling devices is provided in another exemplary embodiment of the present invention. It can implement the method for controlling the device. The method for controlling the device may be applied in the smart home client or in the devices on the network side. The apparatus for controlling the device includes: a processor, a memory for storing instructions executable by the processor; wherein the processor is configured to: receive a signal sent by a starting device; determine whether the starting device satisfies a starting condition in a linkage scenario in accordance with the signal, wherein the linkage scenario comprises starting conditions and tasks corresponding to the starting conditions, the starting conditions and the tasks being set in accordance with events in the starting device and the tasks being executed (or likely to be executed) by a smart phone; execute a task in the linkage scenario if the staring device satisfies one of the starting conditions in the linkage scenario.

Fig. 8 is a block diagram illustrating an apparatus for controlling devices according to an exemplary embodiment. For example, the apparatus 800 may be the smart device installed with the smart home client.

Referring to Fig. 8, the apparatus 800 may include one or more of the following components: a processing component 802, a memory 804, a power component 806, a multimedia component808, an audio component 810, an input/output (I/O) interface 812, a sensor component 814, and a communication component 816.

The processing component 802 typically controls overall operations of the apparatus 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the apparatus 800. Examples of such data include instructions for any applications or methods operated on the apparatus 800, contact data, phonebook data, messages, pictures, video, etc. The memory 804 may be implemented using any type ofvolatile or non-volatile memory devices, or a combination thereof, such asa static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the apparatus 800. The power component 806 may include a power management system, one or more power sources, and any other components associated with the generation, management, and distribution of power for the apparatus 800.

The multimedia component 808 includes a screen providing an output interface between the apparatus 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808includes a front camera and/or a rear camera. The front camera and the rear camera may receive an external multimedia datum while the apparatus800 is in an operation mode, such as a photographing mode or a video mode. Each of the front camera and the rear camera may be a fixed optical lens system or have optical focusing and zooming capability.

The audio component 810 is configured to output and/or input audio signals. For example, the audio component 810 includes a microphone ("MIC") configured to receive an external audio signal when the apparatus 800 is in anoperation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, the peripheral interface modules being, for example, a keyboard, a click wheel, buttons, and the like. The buttons may include, but are not limited to, a home button, a volume button, a starting button, and a locking button.

The sensor component 814 includes one or more sensors to provide status assessments of various aspects of the apparatus 800. For instance, the sensor component 814 may detect an open/closed status of the apparatus 800, relative positioning of components(e.g., the display and the keypad, of the apparatus 800), a change in position of the apparatus 800 or a component of the apparatus 800, a presence or absence of user contact with the apparatus 800, an orientation or an acceleration/deceleration of the apparatus 800, and a change in temperature of the apparatus 800. The sensor component 814 may include a proximity sensorconfigured to detect the presence of a nearby object without any physical contact. The sensor component 814 may also include a light sensor, such as a CMOS or CCD image sensor, for use in imaging applications. In some embodiments, the sensor component 814 may also include an accelerometer sensor, a gyroscope sensor, a magnetic sensor, a pressure sensor, or a temperature sensor.

The communication component 816 is configured to facilitate communication, wired or wirelessly,between the apparatus 800 and other devices. The apparatus 800 can access a wireless networkbased on a communication standard, such as WiFi, 2G, or 3G, or a combination thereof. In an exemplary embodiment, the communication component 816receives a broadcast signal or broadcast associated information from an external broadcast management system via a broadcast channel. In an exemplary embodiment, the communication component 816 further includes a near field communication (NFC) module to facilitate short-range communications. For example, the NFC module may be implementedbased on a radio frequency identification (RFID) technology, an infrared data association (IrDA) technology, an ultra-wideband (UWB) technology, a Bluetooth (BT) technology, and other technologies.

In exemplary embodiments, the apparatus 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 804, executable by the processor 820 in the apparatus 800, for performing the above-described methods. For example,the non-transitorycomputer-readable storage mediummay bea ROM, a RAM, a CD-ROM, a magnetic tape, a floppy disc, an optical data storage device, and the like.

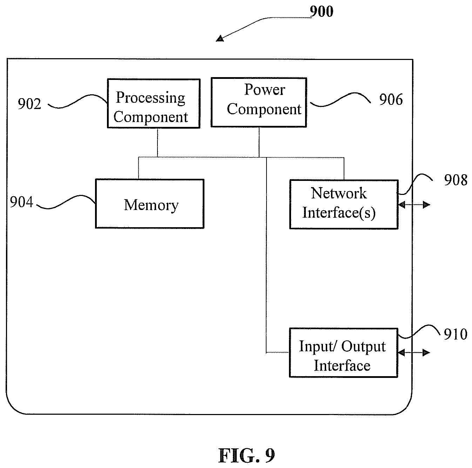

Fig. 9 is a block diagram illustrating an apparatus for controlling devices according to an exemplary embodiment. For example, the apparatus 900 may be a device on network side. Referring to Fig.9, the apparatus900 may include a processing component 902 (e.g. one or more processors), and the memory resource represented by a memory 904, which used to store the instructions executable by the processing component 902, such as application. The application stored in memory 904 includes one or more modules corresponding to the instructions. Additionally, the processing component 902 is configured to execute instructions, in order to execute the method for controlling the device.

The apparatus900 may also include a power supply 906 which configured to execute the power manager of the apparatus 900, a wired or wireless network interfaces 908 which configured to connect the apparatus 900 to network, and an input/output interface 910. The apparatus 900 can be operated based on the operating systems stored in the memory 904, such as Windows Server™, Mac OS X™, Unix™, Linux™, FreeBSD™, or the like.

Other embodiments of the invention will be apparent to those skilled in the art from consideration of the specification and practice of the inventions herein. This application is intended to cover any variations, uses, or adaptations of the invention following the general principles thereof and including such departures from the present invention as come within known or customary practice in the art. It is intended that the specification and examples be considered as exemplary only.

It will be appreciated that the inventive concept is not limited to the exact construction that has been described above and illustrated in the accompanying drawings, and that various modifications and changes can be made without departing from the scope thereof. It is intended that the scope of the invention only be limited by the appended claims.

## Claims

1. A method, implemented in a smart home client installed in a smart phone (102), for controlling devices, said method comprising:
when an event occurs in the smart phone, detecting (201) whether the event is a starting condition in a linkage scenario, wherein the linkage scenario comprises starting conditions and tasks corresponding to the starting conditions, the starting conditions and the tasks being set in accordance with events in the smart phone and the tasks being executed by executing devices;
in response to a determination that the event is one of the starting conditions in the linkage scenario, automatically determining (202) an executing device corresponding to the starting condition in the linkage scenario; and
automatically controlling (203) the executing device to execute a task in the linkage scenario that is corresponding to the one of the starting conditions, wherein
the events comprises one or more of the following items: receiving an incoming call, hanging up an incoming call, receiving a short message, replying a short message, shutting off, restarting, turning up a volume, turning down a volume, starting a silent mode, closing a silent mode, starting an airplane mode, closing an airplane mode or events determined by parameters sensed by sensors in the smart phone, wherein the parameters are a light intensity, a volume, an acceleration and/or an angular acceleration.

2. The method of claim 1, wherein controlling (203) the executing device to execute a task in the linkage scenario comprises:
generating (304) an executing instruction in accordance with the task in the linkage scenario;
sending (305) the executing instruction to the executing device, wherein the executing instruction is used to trigger the execution of the task in the linkage scenario by the executing device.

3. The method of claim 1 or 2, further comprising:
in a process of setting the linkage scenario, after one of the events related to the smart phone is selected, setting (301a) the selected event as a starting condition in the linkage scenario;
after one of the tasks related to the executing devices is selected, setting (301b) the selected task as a task in the linkage scenario.

4. An apparatus, implemented in a smart home client installed in a smart phone (102), for controlling devices comprising:
a receiving module (710) configured to receive a signal sent by a starting device, wherein the signal carries a parameter for determining an event occurring in the starting device, wherein the event comprises one or more of the following items: starting up, shutting off, restarting, starting a refrigeration mode, starting a heating mode, detecting someone entering or detecting someone leaving;
a determining module (720) configured to determine whether the starting device satisfies one of starting conditions in a linkage scenario in accordance with the event determined from the signal received by the receiving module, wherein the linkage scenario comprises the starting conditions and tasks corresponding to the starting conditions, the starting conditions and the tasks being set in accordance with events in the starting device and the tasks being executed by the smart phone;
an executing module (730) configured to automatically control, in response to that the determining module determines that the starting device satisfies one of the starting conditions in the linkage scenario, the smart phone to execute a task in the linkage scenario that is corresponding to the one of the starting conditions, wherein
the tasks are shutting off, receiving an incoming call, displaying an unread message, restarting, turning up a volume, turning down a volume, starting a silent mode, closing a silent mode, starting an airplane mode, and closing an airplane mode.

5. The apparatus of claim 4, wherein the determining module (720) comprises:
a determining sub-module (721) configured to determine the event occurring in the starting device in accordance with the parameters carried in the signal received by the receiving module;
a detecting sub-module (722) configured to detect whether the event determined by the determining sub-module is the one of starting conditions in the linkage scenario.

6. The apparatus of claim 4 or 5, further comprising:
a first setting module (740) configured to, in a process of setting the linkage scenario, after one of the events related to the starting device is selected, set the selected event as a starting condition in the linkage scenario;
a second setting module (750) configured to, in the process of setting the linkage scenario, after one of the tasks related to the smart phone is selected, set the selected task as a task in the linkage scenario.

7. A computer program including instructions for executing the steps of a method for controlling devices according to any of claims 1 to 3 when said program is executed by a computer.

8. A recording medium readable by a computer and having recorded thereon a computer program according to claim 7 including instructions for executing the steps of a method for controlling devices according to any of claims 1 to 3.

## Patentansprüche

1. Verfahren zum Steuern von Vorrichtungen, das in einem Smart-Home-Client implementiert ist, der in einem Smartphone (102) installiert ist, wobei das Verfahren umfasst:
wenn ein Ereignis in dem Smartphone auftritt, Erfassen (201), ob das Ereignis eine Startbedingung in einem Verknüpfungsszenario ist, wobei das Verknüpfungsszenario Startbedingungen und Aufgaben umfasst, die den Startbedingungen entsprechen, wobei die Startbedingungen und die Aufgaben in Übereinstimmung mit Ereignissen in dem Smartphone festgelegt sind und die Aufgaben durch ausführende Vorrichtungen ausgeführt werden,
als Reaktion auf eine Bestimmung, dass das Ereignis eine der Startbedingungen in dem Verknüpfungsszenario ist, automatisches Bestimmen (202) einer ausführenden Vorrichtungen, die der Startbedingung in dem Verknüpfungsszenario entspricht, und
automatisches Steuern (203) der ausführenden Vorrichtung zur Ausführung einer Aufgabe in dem Verknüpfungsszenario, die der einen der Startbedingungen entspricht, wobei
das Ereignis eines oder mehrere der folgenden Elemente umfasst: Empfangen eines eingehenden Anrufs, Beenden eines eingehenden Anrufs, Empfangen einer Kurznachricht, Beantworten einer Kurznachricht, Ausschalten, Neustart, Hochdrehen einer Lautstärke, Herunterdrehen einer Lautstärke, Starten eines stillen Modus, Beenden eines stillen Modus, Starten eines Flugzeugmodus, Beenden eines Flugzeugmodus oder von Ereignissen, die durch Parameter bestimmt werden, die von Sensoren in dem Smartphone erfasst werden, wobei die Parameter eine Lichtintensität, eine Lautstärke, eine Beschleunigung und/oder eine Winkelbeschleunigung sind.

2. Verfahren nach Anspruch 1, wobei das Steuern (203) der ausführenden Vorrichtung zur Ausführung einer Aufgabe in dem Verknüpfungsszenario umfasst:
Generieren (304) einer Ausführungsanweisung in Übereinstimmung mit der Aufgabe in dem Verknüpfungsszenario,
Senden (305) der Ausführungsanweisung an die ausführende Vorrichtung, wobei die Ausführungsanweisung verwendet wird, um die Ausführung der Aufgabe in dem Verknüpfungsszenario durch die ausführende Vorrichtung auszulösen.

3. Verfahren nach Anspruch 1 oder 2, ferner umfassend:
in einem Prozess der Einstellung des Verknüpfungsszenarios, nachdem eines der Ereignisse im Zusammenhang mit dem Smartphone ausgewählt wurde, Festlegen (301a) des ausgewählten Ereignisses als eine Startbedingung in dem Verknüpfungsszenario,
nachdem eine der auf die ausführenden Vorrichtungen bezogenen Aufgaben ausgewählt wurde, Festlegen (301b) der ausgewählte Aufgabe als eine Aufgabe in dem Verknüpfungsszenario.

4. Gerät zum Steuern von Vorrichtungen, das in einem Smart-Home-Client implementiert ist, der in einem Smartphone (102) installiert ist, umfassend:
ein Empfangsmodul (710), das dazu konfiguriert ist, ein von einer Startvorrichtung gesendetes Signal zu empfangen, wobei das Signal einen Parameter zum Bestimmen eines Ereignisses trägt, das in der Startvorrichtung auftritt, wobei das Ereignis eines oder mehrere der folgenden Elemente umfasst: Hochfahren, Abschalten, Neustarten, Starten eines Kühlmodus, Starten eines Heizmodus, Erkennen, dass jemand eintritt oder Erkennen, dass jemand austritt,
ein Bestimmungsmodul (720), das dazu konfiguriert ist, bestimmen, ob die Startvorrichtung eine von Startbedingungen in einem Verknüpfungsszenario in Übereinstimmung mit dem Ereignis erfüllt, das aus dem von dem Empfangsmodul empfangenen Signal bestimmt wurde, wobei das Verknüpfungsszenario die Startbedingungen und Aufgaben umfasst, die den Startbedingungen entsprechen, wobei die Startbedingungen und die Aufgaben in Übereinstimmung mit Ereignissen in der Startvorrichtung und den Aufgaben, die von dem Smartphone ausgeführt werden, eingestellt werden,
ein Ausführungsmodul (730), das dazu konfiguriert ist, als Reaktion darauf, dass das Bestimmungsmodul bestimmt, dass die Startvorrichtung eine der Startbedingungen in dem Verknüpfungsszenario erfüllt, das Smartphone automatisch dazu zu steuern, eine Aufgabe in dem Verknüpfungsszenario ausführt, die der einen der Startbedingungen entspricht, wobei
die Aufgaben Abschalten, Empfangen eines eingehenden Anrufs, Anzeigen einer ungelesenen Nachricht, Neustart, Hochdrehen einer Lautstärke, Herunterdrehen einer Lautstärke, Starten eines stillen Modus, Beenden eines stillen Modus, Starten eines Flugzeugmodus und Beenden eines Flugzeugmodus sind.

5. Gerät nach Anspruch 4, wobei das Bestimmungsmodul (720) umfasst:
ein Bestimmungs-Untermodul (721), das dazu konfiguriert ist, das in der Startvorrichtung auftretende Ereignis in Übereinstimmung mit den Parametern zu bestimmen, die in dem von dem Empfangsmodul empfangenen Signal übertragen werden,
ein Erfassungs-Untermodul (722), das dazu konfiguriert ist, zu erfassen, ob das durch das Bestimmungs-Untermodul bestimmte Ereignis dasjenige von Startbedingungen in dem Verknüpfungsszenario ist.

6. Gerät nach Anspruch 4 oder 5, ferner umfassend:
ein erstes Einstellmodul (740), das dazu konfiguriert ist, in einem Prozess des Einstellens des Verknüpfungsszenarios, nachdem eines der Ereignisse in Bezug auf die Startvorrichtung ausgewählt wurde, das ausgewählte Ereignis als Startbedingung in dem Verknüpfungsszenario einzustellen,
ein zweites Einstellmodul (750), das dazu konfiguriert ist, in dem Prozess des Einstellens des Verknüpfungsszenarios, nachdem eine der mit dem Smartphone verbundenen Aufgaben ausgewählt wurde, die ausgewählte Aufgabe als Aufgabe in dem Verknüpfungsszenario einzustellen.

7. Computerprogramm mit Anweisungen zur Ausführung der Schritte eines Verfahrens zum Steuern von Vorrichtungen nach einem der Ansprüche 1 bis 3, wenn das Programm von einem Computer ausgeführt wird.

8. Aufzeichnungsmedium, das von einem Computer lesbar ist und auf dem ein Computerprogramm nach Anspruch 7 aufgezeichnet ist, das Anweisungen zur Ausführung der Schritte eines Verfahrens zum Steuern von Vorrichtungen nach einem der Ansprüche 1 bis 3 umfasst.

## Revendications

1. Procédé mis en œuvre dans un client de maison intelligente installé dans un téléphone intelligent (102), pour commander des dispositifs, ledit procédé comprenant les étapes suivantes :
lorsqu'un événement se produit dans le téléphone intelligent, détecter (201) si l'événement est une condition de démarrage dans un scénario d'enchaînement, dans lequel le scénario d'enchaînement comprend des conditions de démarrage et des tâches correspondant aux conditions de démarrage, les conditions de démarrage et les tâches étant définies en fonction d'événements du téléphone intelligent et les tâches étant exécutées par des dispositifs d'exécution ;
en réponse à la détermination de ce que l'événement est l'une des conditions de démarrage dans le scénario d'enchaînement, déterminer automatiquement (202) un dispositif d'exécution correspondant à la condition de démarrage dans le scénario d'enchaînement ; et
commander automatiquement (203) le dispositif d'exécution pour qu'il exécute une tâche du scénario d'enchaînement qui correspond à l'une des conditions de démarrage ; dans lequel :
les événements comprennent un ou plusieurs des éléments suivants : recevoir un appel entrant, raccrocher lors d'un appel entrant, recevoir un message court, répondre à un message court, arrêter, redémarrer, augmenter un volume, diminuer un volume, activer un mode silencieux, désactiver un mode silencieux, activer un mode avion, désactiver un mode avion ou des événements déterminés par des paramètres détectés par des capteurs du téléphone intelligent, dans lequel les paramètres sont une intensité lumineuse, un volume, une accélération et/ou une accélération angulaire

2. Procédé selon la revendication 1, dans lequel la commande (203) du dispositif d'exécution pour qu'il exécute une tâche du scénario d'enchaînement comprend les étapes suivantes :
créer (304) une instruction d'exécution en fonction de la tâche du scénario d'enchaînement ;
envoyer (305) l'instruction d'exécution au dispositif d'exécution, dans lequel l'instruction d'exécution sert à déclencher l'exécution de la tâche du scénario d'enchaînement par le dispositif d'exécution.

3. Procédé selon la revendication 1 ou 2, comprenant en outre les étapes suivantes :
dans un processus de définition du scénario d'enchaînement, après que l'un des événements se rapportant au téléphone intelligent a été sélectionné, définir (301a) l'événement sélectionné comme une condition de démarrage dans le scénario d'enchaînement ;
après que l'une des tâches se rapportant aux dispositifs d'exécution a été sélectionnée, définir (301b) la tâche sélectionnée comme une tâche dans le scénario d'enchaînement.

4. Appareil mis en œuvre dans un client de maison intelligente installé dans un téléphone intelligent (102) pour commander des dispositifs, comprenant :
un module de réception (710) conçu pour recevoir un signal envoyé par un dispositif de démarrage, dans lequel le signal est porteur d'un paramètre permettant de déterminer un événement se produisant dans le dispositif de démarrage, dans lequel l'événement comprend un ou plusieurs des éléments suivants : démarrer, arrêter, redémarrer, activer un mode de réfrigération, activer un mode de chauffage, détecter l'entrée d'une personne ou détecter le départ d'une personne ;
un module de détermination (720) conçu pour déterminer si le dispositif de démarrage satisfait à l'une des conditions de démarrage dans un scénario d'enchaînement en fonction de l'événement déterminé à partir du signal reçu par le module de réception, dans lequel le scénario d'enchaînement comprend les conditions de démarrage et les tâches correspondant aux conditions de démarrage, les conditions de démarrage et les tâches étant définies en fonction d'événements du dispositif de démarrage et les tâches étant exécutées par le téléphone intelligent ;
un module d'exécution (730) conçu pour commander automatiquement, en réponse au fait que le module de détermination détermine que le dispositif de démarrage satisfait à l'une des conditions de démarrage dans le scénario d'enchaînement, le téléphone intelligent pour qu'il exécute une tâche du scénario d'enchaînement qui correspond à ladite condition de démarrage, dans lequel :
les tâches sont l'arrêt, la réception d'un appel entrant, l'affichage d'un message non lu, le redémarrage, l'augmentation d'un volume, la diminution d'un volume, l'activation d'un mode silencieux, la désactivation d'un mode silencieux, l'activation d'un mode avion et la désactivation d'un mode avion.

5. Appareil selon la revendication 4, dans lequel le module de détermination (720) comprend :
un sous-module de détermination (721) conçu pour déterminer l'événement se produisant dans le dispositif de démarrage en fonction des paramètres dont est porteur le signal reçu par le module de réception ;
un sous-module de détection (722) conçu pour détecter si l'événement déterminé par le sous-module de détermination est l'une des conditions de démarrage dans le scénario d'enchaînement.

6. Appareil selon la revendication 4 ou 5, comprenant en outre :
un premier module de définition (740) conçu pour, dans un processus de définition du scénario d'enchaînement, après que l'un des événements se rapportant au dispositif de démarrage a été sélectionné, définir l'événement sélectionné comme une condition de démarrage dans le scénario d'enchaînement ;
un second module de définition (750) conçu pour, dans le processus de définition du scénario d'enchaînement, après que l'une des tâches se rapportant au téléphone intelligent a été sélectionnée, définir la tâche sélectionnée comme une tâche du scénario d'enchaînement.

7. Programme informatique comportant des instructions destinées à exécuter les étapes d'un procédé permettant de commander des dispositifs selon l'une quelconque des revendications 1 à 3, lorsque ledit programme est exécuté par un ordinateur.

8. Support d'enregistrement lisible par un ordinateur et sur lequel est enregistré un programme informatique selon la revendication 7, comportant des instructions destinées à exécuter les étapes d'un procédé permettant de commander des dispositifs selon l'une quelconque des revendications 1 à 3.
